(19) 

**Europäisches Patentamt**
**European Patent Office**
**Office européen des brevets**

(11) **EP 4 586 191 A1**

(12) **EUROPEAN PATENT APPLICATION**

(43) Date of publication:
**16.07.2025 Bulletin 2025/29**

(21) Application number: **24221597.8**

(22) Date of filing: **19.12.2024**

(51) International Patent Classification (IPC):
**G06T 7/00** *(2017.01)* **G06T 7/62** *(2017.01)*

(52) Cooperative Patent Classification (CPC):
**G01B 15/025; G06T 7/0004; G06T 7/60;**
**G06T 7/62;** G06T 2207/10116; G06T 2207/20081;
G06T 2207/20084

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **05.01.2024 KR 20240001882**

(71) Applicant: **Doosan Enerbility Co., Ltd.**
**Seongsan-gu**
**Changwon-si, Gyeongsangnam-do 51711 (KR)**

(72) Inventors:
• **KWON, Eun**
 **16859 Gyeonggi-do (KR)**
• **LEE, Jung Min**
 **06359 Seoul (KR)**
• **JIN, Sung Wook**
 **06114 Seoul (KR)**

(74) Representative: **Ter Meer Steinmeister & Partner**
**Patentanwälte mbB**
**Nymphenburger Straße 4**
**80335 München (DE)**

(54) **APPARATUS AND METHOD FOR MEASURING THICKNESS OF PIPE BASED ON IMAGE ANALYSIS**

(57) Proposed is a method for measuring a thickness. The method includes training neural networks generating a pipe image that distinguishes a pipe from non-pipe object in a radiographic image, generating, by a recognition part, the pipe image using the neural networks; and measuring a pipe thickness as a distance between a first pixel of one outer circumferential surface of the pipe and a second pixel of an inner circumferential surface closest to the first pixel, and a total pipe thickness as a distance between the first pixel and a third pixel of a second outer circumferential surface of the pipe closest to the first pixel, by analyzing the pipe image.

**EP 4 586 191 A1**

*FIG. 3*

## Description

The present application claims priority to Korean Patent Application No. 10-2024-0001882, filed on January 5, 2024.

## BACKGROUND

### 1. Technical Field

The present disclosure relates to measuring the thickness of a pipe and, more particularly, to an apparatus and a method for measuring the thickness of a pipe based on image analysis.

### 2. Description of the Related Art

The existing evaluation method for measuring pipe thickness using computed radiography (CR) is performed manually by an inspector diagnosing the condition of an image file while inspecting the image file visually after converting data recorded on an image plate into the image file. However, such condition diagnosis and measurement may only be accurately assessed by experienced inspectors, and the subjectivity of each inspector in selecting a standard for pipe thickness can make it difficult to establish a generalize standard. Furthermore, due to the difficulty of capturing images from a consistent location, it is difficult to perform accurate historical tracking of the management.

The foregoing is intended merely to aid in the understanding of the background of the present disclosure, and is not intended to mean that the present disclosure falls within the purview of the related art that is already known to those skilled in the art.

## SUMMARY

At least one of these objects is solved by the features of the independent claims. Accordingly, the present disclosure has been made keeping in mind the above problems occurring in the related art, and an objective of the present disclosure is to provide an apparatus and a method for measuring the thickness of a pipe based on image analysis.

According to one aspect, there is provided a method for measuring a thickness, the method including: training neural network(s), by a learning part, generating a pipe image that distinguishes a pipe from a non-pipe object in a radiographic image; generating, by a recognition part, the pipe image using the neural network(s); and measuring, by a measuring part, a pipe thickness which is a distance between a first pixel on a first outer circumferential surface of the pipe and a second pixel on an inner circumferential surface, the inner circumferential surface being closest to the first pixel, and a total pipe thickness which is a distance between the first pixel and a third pixel on a second outer circumferential surface of the pipe, the second outer circumferential surface closest to the first pixel, by analyzing the pipe image.

The measuring may include: specifying, by a measurement line-based measuring part, a detection area through a window moving along the pipe of the pipe image. The measuring may include: estimating, by the measurement line-based measuring part, a center line which is a straight line and parallel to the inner circumferential surface and the first outer circumferential surface of the pipe and is located between the inner circumferential surface and the first outer circumferential surface of the pipe in the detection area using a linear regression model. The measuring may include: detecting, by the measurement line-based measuring part, a measurement line which is a straight line and orthogonal to the center line. The measuring may include: measuring, by the measurement line-based measuring part, the pipe thickness and the total pipe thickness according to pixel values changing along the measurement line.

The measuring of the pipe thickness and the total pipe thickness may include: specifying, by the measurement line-based measuring part, the first pixel, the second pixel, and the third pixel through the pixel value changing along the measurement line. The measuring of the pipe thickness and the total pipe thickness may include: determining, by the measurement line-based measuring part, the distance between the first pixel and the second pixel on the measurement line as the pipe thickness. The measuring of the pipe thickness and the total pipe thickness may include: determining, by the measurement line-based measuring part, the distance between the first pixel and the third pixel on the measurement line as the total pipe thickness.

The measuring may include: extracting, by a contour-based measuring part, a contour of the pipe from the pipe image. The measuring may include: dividing, by the contour-based measuring part, the contours into a plurality of inner circumferential contours and a plurality of outer circumferential contours. The measuring may include: determining, by the contour-based measuring part, a distance between a fourth pixel of the first outer circumferential contour of the plurality of outer circumferential contours and a fifth pixel on an inner circumferential contour of the plurality of inner circumferential contours, the inner circumferential contour being closest to the fourth pixel, as the pipe thickness.; The measuring may include: determining, by the contour-based measuring part, a distance between the fourth pixel and a sixth pixel on a second outer circumferential contour of the plurality of outer circumferential contours, the second outer circumferential contour being closest to the fourth pixel, as the total pipe thickness.

The dividing the contours into the plurality of inner circumferential contours and the plurality of outer circumferential contours may include: estimating, by the contour-based measuring part, a center line passing between two nearby contours of the pipe along a flow direction of the pipe using a polynomial fitting algorithm. The dividing the contours into the plurality of inner circumferential contours and the plurality of outer circumferential contours may include: determining, by the contour-based measuring part, each of the contours as one of an inner circumferential outline and an outer circumferential outline according to a position of each of the contours relative to the center line.

The measuring may include: extracting, by a contour-based measuring part, contours of the pipe from the pipe image. The measuring may include: estimating, by the contour-based measuring part, a center line passing between two nearby contours of the pipe along a flow direction of the pipe using a polynomial fitting algorithm. The measuring may include: dividing, by the contour-based measuring part, the two nearby contours into an inner circumferential contour and an outer circumferential contour according to positions of the two nearby contours relative to the center line. The measuring may include: detecting, by the contour-based measuring part, a sum of a distance between a fourth pixel on the center line and a fifth pixel on the outer circumferential contour closest to the fourth pixel and a distance between the fourth pixel and a sixth pixel on the inner circumferential contour closest to the fourth pixel, and determining the sum as the pipe thickness.

The measuring may include: detecting sequentially, by a measurement line-based measuring part, a center line which is a straight line and is parallel to the inner circumferential surface and the one outer circumferential surface of the pipe and is located between the inner circumferential surface and the first outer circumferential surface, and a measurement line which is a straight line and is orthogonal to the center line. The measuring may include: measuring the pipe thickness and the total pipe thickness using the detected measurement line. The measuring may include: measuring, by a contour-based measuring part, the pipe thickness and the total pipe thickness using contours of the pipe in the pipe image. Here, the method may further include calculating, by an integrated output part, a final pipe thickness and a final total pipe thickness by averaging or interpolating the pipe thickness and the total pipe thickness measured by the measurement line-based measuring part and the pipe thickness and the total pipe thickness measured by the contour-based measuring part, respectively.

The method may further include: converting, by an actual measurement conversion part, the pipe thickness into an actual measurement value based on a ratio of the total pipe thickness to a pre-stored actual measurement value of an entire pipe.

The generating the pipe image may include: detecting, by the recognition part, an area occupied by an object other than the pipe through a bounding box in the pipe image using the neural networks comprising a detection model. The generating the pipe image may include: specifying, by the recognition part, a remaining area excluding the bounding box as a measurement target area.

The generating the pipe image may include: inputting, by the recognition part, the radiographic image into the neural networks comprising a generation model. The generating the pipe image may include: performing, by the generation model, a plurality of operations applying weights learned for the radiographic image to generate the pipe image which distinguishes the pixels occupied by the pipe from pixels occupied by of the non-pipe object.

The method may further include: providing, by a learning part, training data which includes the pipe image including the non-pipe object and the pipe and a target image displaying a target bounding box representing an area occupied by the non-pipe object in the pipe image. The method may further include: inputting, by the learning part, the pipe image into the neural networks comprising a detection model. The method may further include: detecting, by the detection model, a bounding box representing the area occupied by the non-pipe object included in the pipe image through a plurality of operations applying weights which have not been completely trained for the pipe image. The method may further include: calculating, by the learning part, a loss representing a difference between the target bounding box and the detected bounding box through a loss function. The method may further include: updating, by the learning part, the weights of the detection model so that the loss is minimized through optimization, before the generating of the pipe image.

The loss may include at least one of: a coordinate loss representing a difference between coordinates of the target bounding box and coordinates of the detected bounding box; and a classification loss representing a probability that an object within the detected bounding box is the non-pipe object. The method may further include repeating, by the learning part, the detecting of the bounding box, the calculating of the loss, and the updating of the weights until a degree of overlapping between the detected bounding box and the target bounding box is equal to or greater than a predetermined percentage or more and each of the coordinate loss and the classification loss converges to a value equal to or less than a preset target value.

According to a further aspect, there is provided an apparatus for measuring a thickness, the apparatus including: a learning part configured to train neural networks generating a pipe image which distinguishes a pipe from a non-pipe object in a radiographic image; a recognition part configured to generate the pipe image using the neural networks; and a measuring part configured to measure a pipe thickness which is a distance between a first pixel on a first outer circumferential surface of the pipe and a second pixel on an inner circumferential surface, the inner circumferential surface being closest to the first pixel, and a total pipe thickness which is a distance between the first pixel and a third pixel on a second outer circumferential surface of the pipe, the second outer circumferential surface being closest to the first pixel, by analyzing the pipe image.

The measuring part may include a measurement line-based measuring part. The measurement line-based measuring part may be configured to specify a detection area through a window moving along the pipe of the pipe image. The measurement line-based measuring part may be configured to estimate a center line which is a straight line and parallel to the inner circumferential surface and the first outer circumferential surface of the pipe and is located between the inner circumferential surface and the one outer circumferential surface of the pipe in the detection area using a linear regression model. The measurement line-based measuring part may be configured to detect a measurement line which is a straight line and orthogonal to the center line; and to measure the pipe thickness and the total pipe thickness according to pixel values changing along the measurement line.

The measurement line-based measuring part may be configured to specify the first pixel, the second pixel, and the third pixel through the pixel values changing along the measurement line. The measurement line-based measuring part may be configured to determine the distance between the first pixel and the second pixel on the measurement line as the pipe thickness. The measurement line-based measuring part may be configured to determine the distance between the first pixel and the third pixel on the measurement line as the total pipe thickness.

The measuring part may include a contour-based measuring part configured to extract contours of the pipe from the pipe image. The contour-based measuring part may be configured to divide the contours into a plurality of inner circumferential contours and a plurality of outer circumferential contours. The contour-based measuring part may be configured to determine a distance between a fourth pixel on a first outer circumferential contour of the plurality of outer circumferential contours and a fifth pixel on an inner circumferential contour of the plurality of inner circumferential contours, the inner circumferential contour being closest to the fourth pixel, as the pipe thickness. The contour-based measuring part may be configured to determine a distance between the fourth pixel and a sixth pixel on a second outer circumferential contour of the plurality of outer circumferential contours, the second outer circumferential contour being closest to the fourth pixel, as the total pipe thickness.

The contour-based measuring part may be configured to estimate a center line passing between two nearby contours of the pipe along a flow direction of the pipe using a polynomial fitting algorithm. The contour-based measuring part may be configured to determine each of the contours as one of an inner circumferential outline and an outer circumferential outline according to a position of each of the contours relative to the center line.

The measuring part may include a contour-based measuring part configured to extract contours of the pipe from the pipe image. The contour-based measuring part may be configured to estimate a center line passing between two nearby contours of the pipe along a flow direction of the pipe using a polynomial fitting algorithm. The contour-based measuring part may be configured to divide the two nearby contours into an inner circumferential contour and an outer circumferential contour according to positions of the two nearby contours relative to the center line. The contour-based measuring part may be configured to detect a sum of a distance between a fourth pixel on the center line and a fifth pixel on the outer circumferential contour closest to the fourth pixel, and a distance between the fourth pixel and a sixth pixel on the inner circumferential contour closest to the fourth pixel; and determine the sum as the pipe thickness.

The measuring part may include: a measurement line-based measuring part configured to detect sequentially a center line which is a straight and parallel to the inner circumferential surface and the first outer circumferential surface of the pipe and located between the inner circumferential surface and the first outer circumferential surface, and a measurement line which is a straight line and orthogonal to the center line, and to measure the pipe thickness and the total pipe thickness using the detected measurement line. The measuring part may include a contour-based measuring part configured to measure the pipe thickness and the total pipe thickness using contours of the pipe in the pipe image. The measuring part may include an integrated output part configured to calculate a final pipe thickness and a final total pipe thickness by averaging or interpolating the pipe thickness and the total pipe thickness measured by the measurement line-based measuring part and the pipe thickness and the total pipe thickness measured by the contour-based measuring part.

The measuring part may include an actual measurement conversion part configured to convert the pipe thickness into an actual measurement value based on a ratio of the total pipe thickness to a pre-stored actual measurement value of an entire pipe.

The recognition part may be configured to detect an area occupied by a non-pipe obj ect through the bounding box by using the neural networks comprising the detection model in the pipe image. The recognition part may be configured to specify a remaining area excluding the bounding box as a measurement target area.

The recognition part may be configured to input the radiographic image into the neural network model comprising a generation model. The generation model may be configured to perform a plurality of operations applying weights learned for the radiographic image to generate the pipe image which distinguishes the pixels occupied by the pipe from pixels occupied by the non-pipe object.

The apparatus may further include: a/the learning part configured to provide training data which includes the pipe image including non-pipe object and the pipe and a target image displaying a target bounding box representing an area occupied by the non-pipe object in the pipe image; input the pipe image into the neural network comprising a detection model; to detect a bounding box representing the area occupied by the object included in the pipe image through a plurality of operations applying weights which have not been completely trained for the pipe image; to calculate a loss representing a difference between the target bounding box and the detected bounding box through a loss function; and to update the weights of the detection model so that the loss is minimized through optimization, before the generating of the pipe image.

The loss may include at least one of: a coordinate loss representing a difference between coordinates of the target bounding box and coordinates of the detected bounding box; and a classification loss representing a probability that the non-pipe object within the detected bounding box is not the pipe. The learning part may repeat the detecting of the bounding box, the calculating of the loss, and the updating of the weights until an overlapping degree of the detected bounding box and the target bounding box is a predetermined percentage or more and each of the coordinate loss and classification loss converges and is a preset target value or less.

According to the present disclosure, an inspector can provide a consistent and normalized measurement result by diagnosing a condition visually and measuring thickness through image analysis rather than measuring manually.

## BRIEF DESCRIPTION OF THE DRAWINGS

FIG. 1 is a diagram illustrating the configuration of a system for measuring the thickness of a pipe based on image analysis according to an embodiment of the present disclosure;
FIG. 2 is a diagram illustrating the configuration of an apparatus for measuring the thickness of a pipe based on image analysis according to an embodiment of the present disclosure;
FIG. 3 is a diagram illustrating a detailed configuration of a measuring part of the apparatus for measuring the thickness of a pipe based on image analysis according to the embodiment of the present disclosure;
FIG. 4 is a flowchart illustrating a method for generating a classification model according to an embodiment of the present disclosure;
FIG. 5 is a flowchart illustrating a method for generating a generation model according to an embodiment of the present disclosure;
FIG. 6 is a flowchart illustrating a method for generating a detection model according to an embodiment of the present disclosure;
FIG. 7 is a flowchart illustrating a method for measuring the thickness of a pipe based on image analysis according to an embodiment of the present disclosure;
FIGS. 8 and 9 are screen examples illustrating the method for measuring the thickness of a pipe based on image analysis according to an embodiment of the present disclosure;
FIG. 10 is a flowchart illustrating a method for measuring the thickness of a pipe based on image analysis of a measurement line-based measuring part according to an embodiment of the present disclosure;
FIGS. 11 and 12 are screen examples illustrating the method for measuring the thickness of a pipe based on the image analysis of the measurement line-based measuring part according to an embodiment of the present disclosure;
FIG. 13 is a flowchart illustrating a method for measuring the thickness of a pipe based on image analysis of a contour-based measuring part according to an embodiment of the present disclosure;
FIGS. 14A, 14B, 14C, 14D, and 15 are screen examples illustrating the method for measuring the thickness of a pipe based on the image analysis of the contour-based measuring part according to the embodiment of the present disclosure;
FIG. 16 is a flowchart illustrating a method for measuring the thickness of a pipe based on image analysis of a contour-based measuring part according to another embodiment of the present disclosure;
FIG. 17 is a screen example illustrating the method for measuring the thickness of a pipe based on the image analysis of the contour-based measuring part according to the another embodiment of the present disclosure; and
FIG. 18 is a diagram illustrating a computing device according to an embodiment of the present disclosure.

## DETAILED DESCRIPTION

Since the present disclosure can be modified in various ways and can have various embodiments, specific embodiments will be exemplified and explained in detail in the detailed description. However, it should be noted that the present disclosure is not limited thereto, and may include all of modifications, equivalents, and substitutions within the scope of the present disclosure.

Terms used herein are used to merely describe specific embodiments, and are not intended to limit the present disclosure. As used herein, an element expressed as a singular form includes a plurality of elements, unless the context clearly indicates otherwise. Further, it will be understood that the term "comprising" or "including" specifies the presence of stated features, numbers, steps, operations, elements, parts, or combinations thereof, but does not preclude the presence or addition of one or more other features, numbers, steps, operations, elements, parts, or combinations thereof.

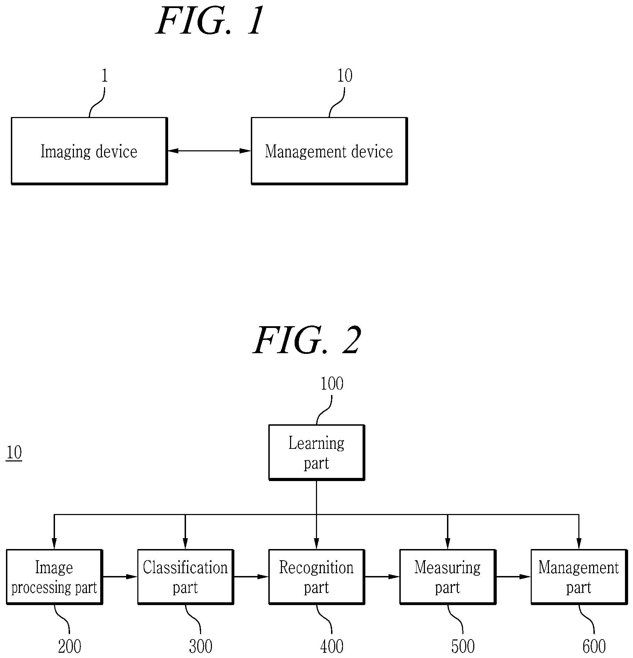

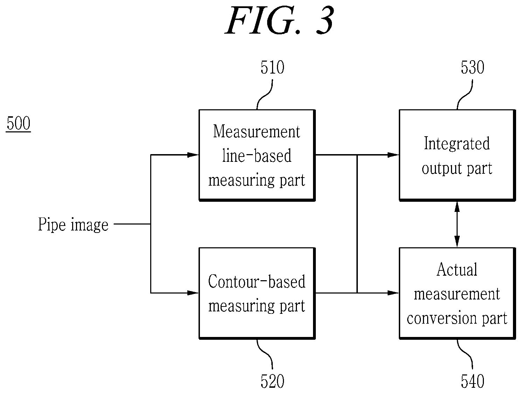

First, a system for measuring the thickness of a pipe based on image analysis according to an embodiment of the present disclosure will be described. FIG. 1 is a diagram illustrating the configuration of the system for measuring the thickness of a pipe based on image analysis according to the embodiment of the present disclosure. FIG. 2 is a diagram illustrating the configuration of an apparatus for measuring the thickness of a pipe based on image analysis according to an embodiment of the present disclosure. FIG. 3 is a diagram illustrating a detailed configuration of a measuring part of the apparatus for measuring the thickness of a pipe based on image analysis according to the embodiment of the present disclosure.

Referring to FIG. 1, the system for measuring the thickness of a pipe based on image analysis includes an imaging device 1 and a management device 10.

The imaging device 1 is for taking a radiographic image. The imaging device 1 provides a radiographic image of a pipe to the management device 10. According to an embodiment, the imaging device 1 may be a computed radiography (CR) device.

The management device 10 converts the radiographic image of the pipe taken from the imaging device 1 into a pipe image, analyzes the pipe image to measure the thickness of the pipe, and manages the pipe by using the measured thickness.

Referring to FIG. 2, the management device 10 includes a learning part 100, an image processing part 200, a classification part 300, a recognition part 400, a measuring part 500, and a management part 600.

The learning part 100 is intended to generate one or more neural network model (NNM) according to an embodiment of the present disclosure through learning (machine learning/deep learning). The neural network model (NNM) according to the embodiment of the present disclosure may include a classification model (CM), a generation model (GM), and a detection model (DM). As another example, the CM, GM, and DM may each be an independent neural network.

The neural network model (NNM), which includes the classification model (CM), the generation model (GM) and the detection model (DM), includes a plurality of layers. In addition, each of the plurality of layers of the neural network model (NNM) performs a plurality of operations that are weighted. That is, each of the operation results of each of a plurality of operation modules included in one layer of the neural network model (NNM) is weighted and transmitted to the next layer. This means that the operation result of a current layer is weighted and input into the operation of a next layer. Thus, the neural network model (NNM) performs a plurality of operations in which weights are applied between the plurality of layers. The plurality of layers of the neural network model (NNM) may include a fully-connected layer, a convolutional layer, a recurrent layer, a graph layer, and a pooling layer, etc. The plurality of operations may include a convolution operation, a down-sampling operation, an up-sampling operation, a pooling operation, and an operation based on an activation function, etc. Here, the activation function may include sigmoid, hyperbolic tangent (tanh), an exponential linear unit (ELU), a rectified linear unit (ReLU), Leaky ReLU, Maxout, Minout, and Softmax, etc.

The classification model (CM) derives a classification vector that predicts the type of the shape of a pipe included in the radiographic image as a probability from a feature vector representing a feature derived from an extreme point of a graph representing the histogram distribution of the radiographic image. The classification model (CM) may be a multi-layer perceptron (MLP) as a representative example.

The generation model (GM) generates the pipe image, which is a binary image that distinguishes and displays a pixel occupied by the pipe from pixels of other areas, such as a non-pipe object, in the radiographic image of the pipe. Representative examples of the generation model (GM) include U-Net and Mask R-CNN, etc.

The detection model (DM) detects an area occupied by the non-pipe object in the pipe image by using a bounding box. The detection model (DM) may include R-CNN, R_FCN FPN-FRCM, YOLO, SSD, and RetinaNet, etc.

The image processing part 200 is intended to obtain the radiographic image of the pipe taken through the imaging device 1. The image processing part 200 may remove a non-pipe object overlapping with a target pipe through a machine learning-based image processing technique. Examples of such a machine learning-based image processing technique may include depth-based blurring and Gaussian blurring, etc.

The classification part 300 is intended to classify the radiographic image according to the shape of the pipe within the radiographic image through the classification model (CM). Examples of the shape of the pipe may include an I-shape, a T-shape, and a U-shape, etc. First, the classification part 300 derives a graph representing the histogram distribution of the radiographic image. After that, the classification part 300 detects an extreme point on the graph. Next, the classification part 300 constructs the feature vector representing at least one feature of the detected extreme point. Features derived from the extreme point may include the sign of the extreme point, the coordinates of the extreme point, the sign of a neighboring extreme point, the coordinates of the neighboring extreme point, and difference in the coordinates between the extreme point and the neighboring extreme point, etc. Next, the classification part 300 analyzes the feature vector through the classification model (CM) to derive the classification vector that represents the shape of the pipe as a probability. Then, the classification part 300 classifies the shape of the pipe according to the probability of the classification vector. For example, it is assumed that the derived classification vector is "[an I shape, a U shape, a T shape] = [0.119, 0.114, 0.767]". This indicates that the probability of the pipe shape being in the I shape is 12%, the probability of the pipe shape being in the U shape is 11%, and the probability of the pipe shape being in the T shape is 77%. Accordingly, the classification part 300 classifies the shape of the pipe into the T-shape.

The recognition part 400 is intended to derive the pipe image from the radiographic image. To this end, the recognition part 400 may first move and dispose a pipe portion in the radiographic image to a region of interest (ROI) of the radiographic image. Then, the recognition part 400 may enhance the contour of the pipe portion in the radiographic image through image processing. In this way, the recognition part 400 enhances the contour of the pipe portion so that the pipe portion is more clearly identified. In addition, the recognition part 400 may derive a pipe image that distinguishes the pipe from the non-pipe object in the radiographic image through a trained generation model (GM) and displays the pipe image. In this case, the recognition part 400 inputs the radiographic image into the generation model (GM). Then, the generation model may perform a plurality of operations applying weights learned for the radiographic image to generate the pipe image which distinguishes pixels occupied by the pipe from pixels of other areas and displays the result. This pipe image may be a binary image in which the pixels occupied by the pipe are represented as '0' and the remaining pixels are represented as 1. In addition, the recognition part 400 may specify a measurement target area in the pipe image and provide the pipe image of the specified measurement target area to the measuring part 500. To this end, the recognition part 400 first detects an area occupied by a non-pipe object through the bounding box by using the detection model (DM) in the pipe image. Then, the recognition part 400 removes the area of the bounding box and specifies the remaining area excluding the area of the bounding box as a measurement target area. In addition, the recognition part 400 may provide the pipe image of the specified measurement target area to the measuring part 500.

The measuring part 500 analyzes the pipe image to measure the pipe thickness and total pipe thickness. Here, the pipe thickness represents a distance between a first pixel on an outer circumferential surface of the pipe and a second pixel on an inner circumferential surface, wherein the inner circumferential surface is the closest inner circumferential surface among a plurality of inner circumferential surfaces to the first pixel of the outer circumferential surface. In addition, the total pipe thickness represents a distance between a first pixel on the outer circumferential surface of the pipe and a third pixel of another outer circumferential surface of the pipe, wherein the another outer circumferential surface of the pipe is the closest outer circumferential surface among a plurality of outer circumferential surfaces to the first pixel on the outer circumferential surface. For measuring the pipe thickness and the total pipe thickness, the measuring part 500 includes a measurement line-based measuring part 510, a contour-based measuring part 520, an integrated output part 530, and an actual measurement conversion part 540. The specific operation of the measuring part 500 including the measurement line-based measuring part 510, the contour-based measuring part 520, the integrated output part 530, and the actual measurement conversion part 540 will be described in more detail below.

The management part 600 stores information about the pipe including the pipe thickness and the total pipe thickness measured by the measuring part 500, and manages the pipe through the stored pipe information. The management part 600 may also transmit a control signal to a device to control the device flowing a substance through the pipe, such as a pump, valve, compressor, or flow meter, to regulate the flow of liquid, gas, or slurry.

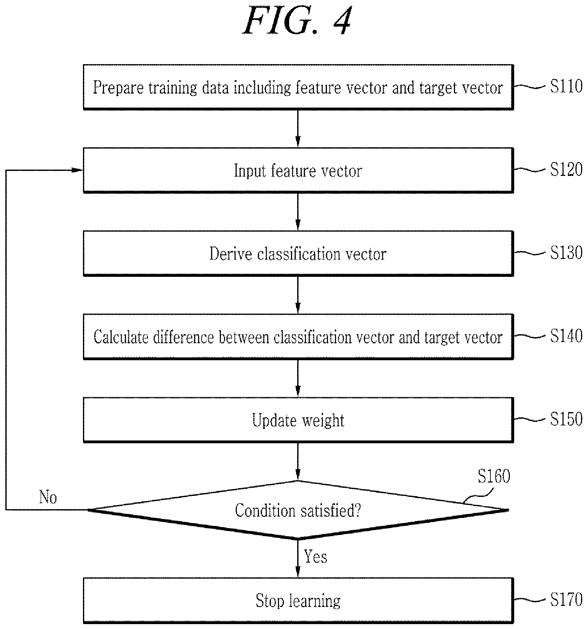

Next, a method for generating the classification model (CM) according to an embodiment of the present disclosure will be described. FIG. 4 is a flowchart illustrating the method for generating the classification model according to an embodiment of the present disclosure.

Referring to FIG. 4, the learning part 100 prepares training data for training the classification model (CM) in S110. The training data include the feature vector and a target vector corresponding to the feature vector. The feature vector represents a feature derived from an extreme point of a graph representing the histogram distribution of the radiographic image. This feature includes the sign of the pole, the coordinates of the pole, a sign of the extreme point, coordinates of the extreme point, a sign of a neighboring extreme point, coordinates of the neighboring extreme point, and difference in coordinates between neighboring extreme points, etc.

The target vector indicates the type of the shape of a pipe corresponding to the feature vector. For example, the target vector may be generated by hardcoding. For example, when the shape of a pipe includes three shapes including an I-shape, a U shape, and a T shape, and the shape of a pipe corresponding to the feature vector is a T shape, the target vector may be "a shape, a U shape, a T shape] = [0, 0, 1]".

When the training data is prepared, the learning part 100 inputs the feature vector into the classification model (CM) that has not been completely trained in S120. Then, in S130, the classification model (CM) performs a plurality of operations applying weights that have not been completely trained across the plurality of layers for an image, and derives the classification vector that predicts the type of the shape of a pipe included in the radiographic image as a probability. The classification vector represents predicted probability for each type of pipe shapes being learned. For example, the classification vector derived may be "[an I shape, a U shape, a T shape] = [0.119, 0.114, 0.767]".

Accordingly, the learning part 100 may produce a loss that represents difference between the classification vector and the target vector through a loss function in S140. According to an embodiment, the learning part 100 may produce the loss through the loss function according to the following mathematical formula 1.

【Mathematical formula 1】

$$D1 = -\frac{1}{N} \sum_{n}^{N} [y_n \log c_n + (1 - y_n) \log (1 - c_n)]$$

Here, D1 represents a loss, which is the output of the loss function. In addition, y represents the target vector, c represents the classification vector, and n represents the index of the training data.

Next, in S150, the learning part 100 performs optimization to update the weights of the classification model (CM) so that the loss derived through the loss function is minimized through an optimization algorithm.

Next, in S160, the learning part 100 determines whether a learning completion condition is satisfied. According to an embodiment, the learning completion condition may be a case in which the loss converges and is a preset target value or less.

When the learning completion condition is not satisfied as a result of the determination in S160, S120 to S150 described above are repeated. In this case, S120 to S150 described above are repeated by using a plurality of different learning data, and the weights of the classification model (CM) are repeatedly updated according to this repetition.

When the learning completion condition is satisfied as the result of the determination in S160, that is, when the loss converges to a value equal to or less than the preset target value, the learning part 100 completes learning for the classification model (CM) in S170.

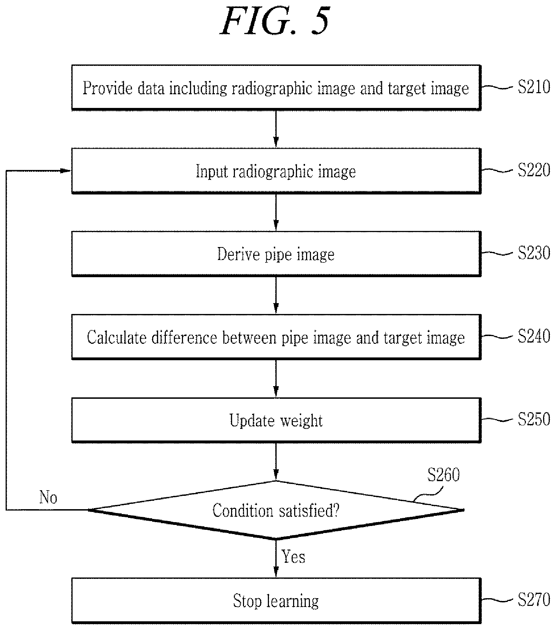

Next, a method for generating the generation model (GM) according to an embodiment of the present disclosure will be described. FIG. 5 is a flowchart illustrating the method for generating the generation model according to an embodiment of the present disclosure.

Referring to FIG. 5, the learning part 100 prepares training data for training the generation model (GM) in S210. The training data includes the radiographic image of a pipe and a target image corresponding to the radiographic image. The target image is an image that distinguishes pixels occupied by the pipe from pixels of other areas, such as non-pipe object, in the radiographic image, and displays the result. For example, the target image may be a binary image in which pixels occupied by the pipe are represented as '0' and the remaining pixels are represented as 1.

When the training data is prepared, the learning part 100 inputs the radiographic image into the generation model (GM) that has not been completely trained in S220. Then, in S230, the generation model (GM) performs a plurality of operations applying weights that have not been completely trained across the plurality of layers for an image, and derives the pipe image which distinguishes and displays pixels occupied by the pipe from pixels of other areas included in the radiographic image. This pipe image may be a binary image in which the pixels occupied by the pipe are represented as '0' and the remaining pixels are represented as 1.

Accordingly, the learning part 100 may produce a loss that represents difference between the pipe image derived through the loss function and the target image in S140. According to an embodiment, the learning part 100 may produce the loss through the loss function according to the following mathematical formula 2.

【Mathematical formula 2】

$$D2 = 1 - \frac{2 \sum_{i=0}^{N}(G_i + R_i) + \varepsilon}{\sum_{i=0}^{N}(G_i^2 + R_i^2) + \varepsilon}$$

Here, D2 represents a loss according to the loss function. In addition, i is the index of a pixel, G is the pixel of a pipe image, and R is the pixel of a target image. Additionally, $\varepsilon$ is a hyperparameter and is a preset value.

Next, in S250, the learning part 100 performs optimization to update the weights of the generation model (GM) so that the loss derived through the loss function is minimized by using an optimization algorithm.

Next, in S260, the learning part 100 determines whether the learning completion condition is satisfied. According to an embodiment, the learning completion condition may be a case in which the loss converges and is a preset target value or less.

When the learning completion condition is not satisfied as a result of the determination in S260, S220 to S250 described above are repeated. In this case, S220 to S250 described above are repeated by using a plurality of different learning data, and the weights of the generation model (GM) are repeatedly updated according to this repetition.

On the other hand, when the learning completion condition is satisfied as the result of the determination in S260, that is, when the loss converges to a value equal to or less than the preset target value, the learning part 100 completes learning for the generation model (GM) in S270.

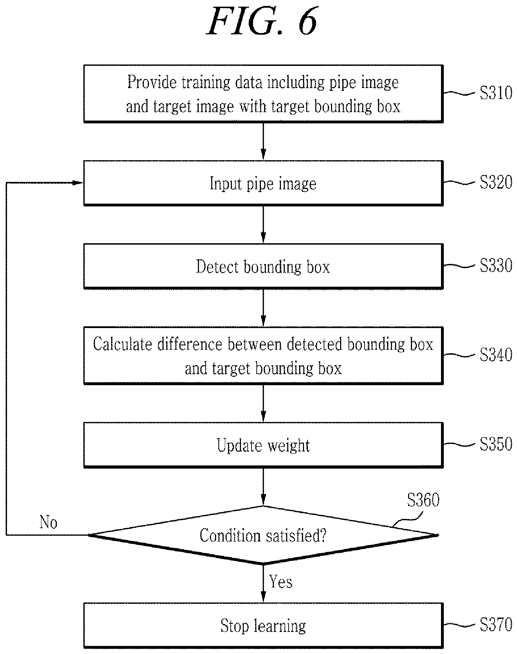

Next, a method for generating the detection model (DM) according to an embodiment of the present disclosure will be described. FIG. 6 is a flowchart illustrating the method for generating the detection model according to an embodiment of the present disclosure.

Referring to FIG. 6, the learning part 100 prepares training data for training the detection model (DM) in S310. The training data includes a pipe image and a target image with a target bounding box corresponding to the pipe image. The pipe image may be an image including both a pipe and an object other than the pipe. The target image is an image in which the target bounding box, which indicates an area occupied by the object other than the pipe, is displayed in the pipe image.

When the training data is prepared, the learning part 100 inputs the pipe image into the detection model (DM), which has not been completely trained, in S320. Then, in S330, the detection model (DM) performs a plurality of operations applying weights that have not been completely trained across the plurality of layers for the pipe image and derives a bounding box which displays the area occupied by the object other than the pipe in the pipe image.

Accordingly, in S340, the learning part 100 may produce a loss that represents difference between the bounding box detected through the loss function and the target bounding box.

Here, the loss includes a coordinate loss that represents difference between the coordinates of the target bounding box and the coordinates of the detected bounding box, and a classification loss that represents the probability that an object within the detected bounding box is the non-pipe object.

Next, in S350, the learning part 100 performs optimization to update the weights of the detection model (GM) so that the loss derived through the loss function is minimized by using an optimization algorithm.

Next, in S360, the learning part 100 determines whether the learning completion condition is satisfied. According to an embodiment, the learning completion condition may be a case in which the degree of overlapping between the detected bounding box and the target bounding box is equal to or greater than a predetermined percentage and each of the coordinate loss and classification loss converges to a value equal to or less than a preset target value.

When the learning completion condition is not satisfied as a result of the determination in S360, S320 to S350 described above are repeated. In this case, S320 to S350 described above are repeated by using a plurality of different learning data, and the weights of the detection model (DM) are repeatedly updated according to this repetition.

On the other hand, when the learning completion condition is satisfied as the result of the determination in S360, that is, when the overlapping degree of the detected bounding box and the target bounding box is a predetermined percentage or more and each of the coordinate loss and classification loss converges and is a preset target value or less, the learning part 100 completes learning for the detection model (DM) in S370.

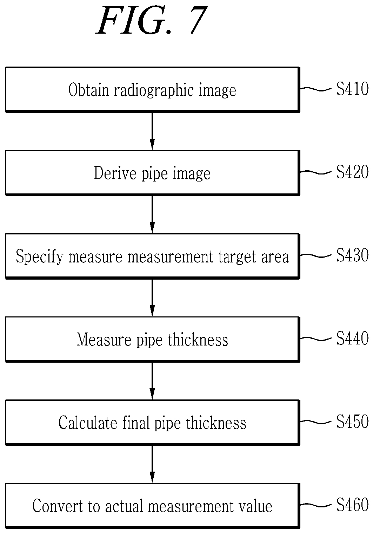

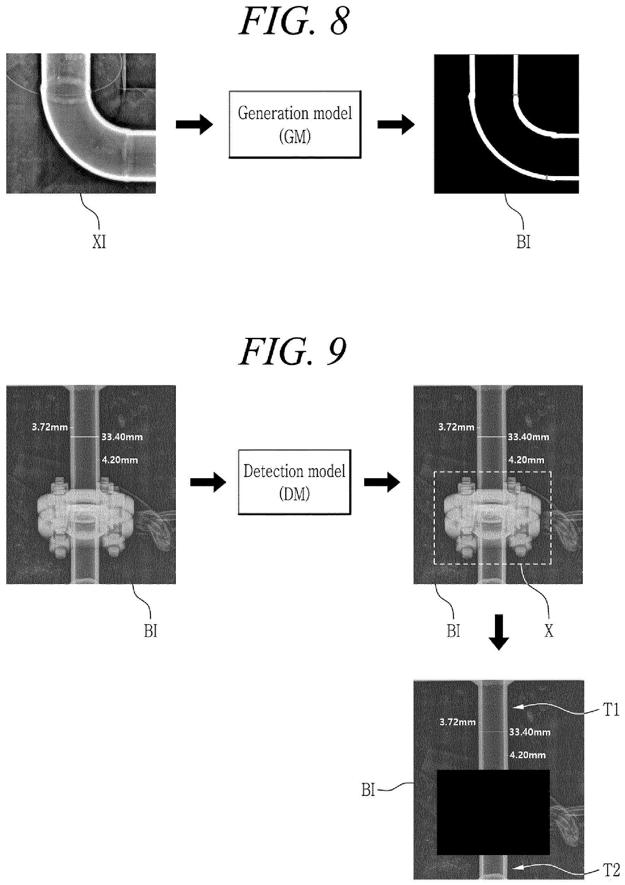

Next, a method for measuring the thickness of a pipe based on image analysis according to an embodiment of the present disclosure will be described. FIG. 7 is a flowchart illustrating the method for measuring the thickness of a pipe based on image analysis according to the embodiment of the present disclosure. FIGS. 8 and 9 are screen examples illustrating the method for measuring the thickness of a pipe based on image analysis according to an embodiment of the present disclosure.

Referring to FIG. 7, in S410, the image processing part 200 obtains a radiographic image of the pipe taken through the imaging device 1.

Next, in S420, the recognition part 400 derives a pipe image that distinguishes the pipe from other areas in the radiographic image through the trained generation model (GM) and displays the result. In this S450, the recognition part 400 inputs the radiographic image XI into the generation model (GM), as illustrated in FIG. 8. Then, the generation model (GM) may perform a plurality of operations applying weights learned for the radiographic image to generate a pipe image BI which distinguishes and displays pixels occupied by the pipe from pixels of other parts. This pipe image BI may be a binary image in which the pixels occupied by the pipe are represented as '0' and the remaining pixels are represented as 1.

Next, in S430, the recognition part 400 may specify a measurement target area in the pipe image to provide the pipe image of the specified measurement target area to the measuring part 500. The S430 is described in more detail below: As illustrated in FIG. 9, the recognition part 400 first detects, through the bounding box X, an area occupied by the non-pipe object using the detection model (DM) in the pipe image BI. Then, the recognition part 400 removes the area of the bounding box X and specifies the remaining area excluding the area of the bounding box X as the measurement target areas T1 and T2. Then the recognition part 400 provides the pipe image BI of the specified measurement target area to the measuring part 500.

Next, in S440, the measuring part 500 analyzes the pipe image to measure pipe thickness and total pipe thickness. Here, the pipe thickness represents a distance between a first pixel on an outer circumferential surface of the pipe and a second pixel on an inner circumferential surface of the pipe, wherein the inner circumferential surface is the closest inner circumferential surface among a plurality of inner circumferential surfaces to the first pixel on the outer circumferential surface. In addition, the total pipe thickness represents a distance between the first pixel on the outer circumferential surface of the pipe and a third pixel on another outer circumferential surface of the pipe, wherein the another outer circumferential surface of the pipe is the closest outer circumferential surface among a plurality of outer circumferential surfaces to the first pixel of the outer circumferential surface. In this S440, the measurement line-based measuring part 510 of the measuring part 500 may sequentially detect a center line that is a straight line and parallel to the inner and outer circumferential surfaces of the pipe and is located between inner and outer circumferential surfaces, and a measurement line that is a straight line and orthogonal to the center line, and may measure the pipe thickness and the total pipe thickness using the detected measurement line. In addition, the contour-based measuring part 520 of the measuring part 500 may measure the pipe thickness and the total pipe thickness using the contours of the pipe in the pipe image. Methods for measuring the pipe thickness and the total pipe thickness by each of the measurement line-based measuring part 510 and the contour-based measuring part 520 will be described in more detail below.

Next, in S450, the integrated output part 530 of the measuring part 500 may calculate a final pipe thickness and a final total pipe thickness by averaging or interpolating the pipe thickness and the total pipe thickness measured by the measurement line-based measuring part 510 and the pipe thickness and the total pipe thickness measured by the contour-based measuring part 520, respectively.

Next, in S460, the actual measurement conversion part 540 of the measuring part 500 may convert the pipe thickness into an actual measurement value based on the ratio of the total pipe thickness to the pre-stored actual measurement value of the entire pipe.

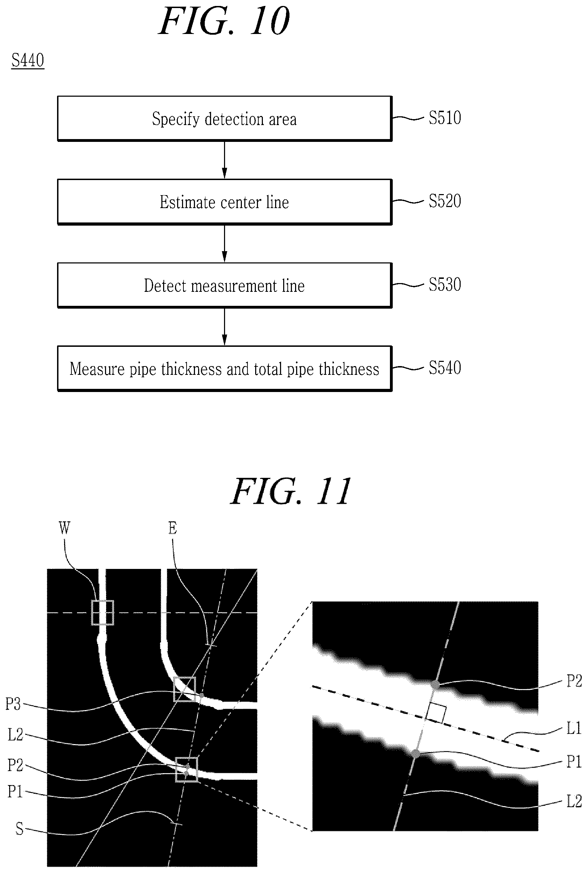

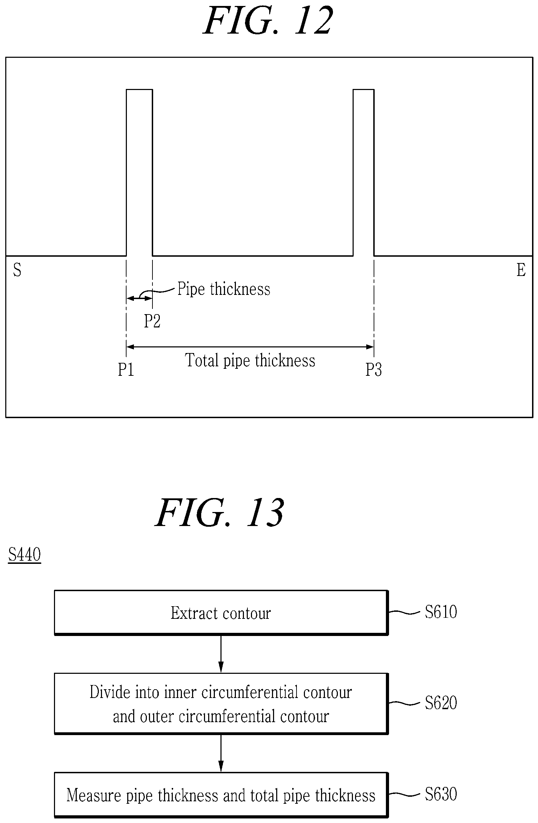

Next, a method for measuring the thickness of a pipe based on image analysis of the measurement line-based measuring part 510 according to an embodiment of the present disclosure will be described. FIG. 10 is a flowchart illustrating the method for measuring the thickness of a pipe based on image analysis of the measurement line-based measuring part according to an embodiment of the present disclosure. FIGS. 11 and 12 are screen examples illustrating the method for measuring the thickness of a pipe based on an image analysis of the measurement line-based measuring part according to an embodiment of the present disclosure. To emphasize, FIG. 10 is a detailed description of S440 of FIG. 7.

Referring to FIG. 10, the measurement line-based measuring part 510 specifies a detection area through a window sliding along the pipe of the pipe image in S510. As illustrated in FIG. 11, the window W may slide along the pipe to specify the detection area.

Next, in S520, the measurement line-based measuring part 510 estimates a center line L1 that is a straight line and parallel to the inner and outer circumferential surfaces of the pipe and is located between the inner and outer circumferential surfaces of the pipe in the detection area using a linear regression model as illustrated in FIG. 11.

Next, in S530, the measurement line-based measuring part 510 detects a measurement line L2 that is a straight line and orthogonal to the center line L1 as illustrated in FIG. 11.

In S540, the measurement line-based measuring part 510 measures the pipe thickness and the total pipe thickness based on pixel values that change along the measurement line L2. S540 is described in more detail below: A graph of pixel values changing along the measurement line L2 between a first point S of the measurement line L2 and a second point E thereof is illustrated in FIG. 12. As illustrated in FIG. 12, the pixel values change on the inner circumferential surface and outer circumferential surface. Accordingly, referring to FIGS. 11 and 12, the measurement line-based measuring part 510 may specify a first pixel P1 which is a pixel of one outer circumferential surface of a pipe, a second pixel P2 which is a pixel of an inner circumferential surface thereof closest to the pixel P1 of the outer circumferential surface, and a third pixel P3 which is a pixel of another outer circumferential surface closest to the first pixel through pixel values that change along the measurement line L2. In addition, the measurement line-based measuring part 510 may derive a distance between the first pixel P1 and the second pixel P2 on the measurement line L2 as the pipe thickness. In addition, the measurement line-based measuring part 510 may derive a distance between the first pixel P1 and the third pixel P3 on the measurement line L2 as the total pipe thickness.

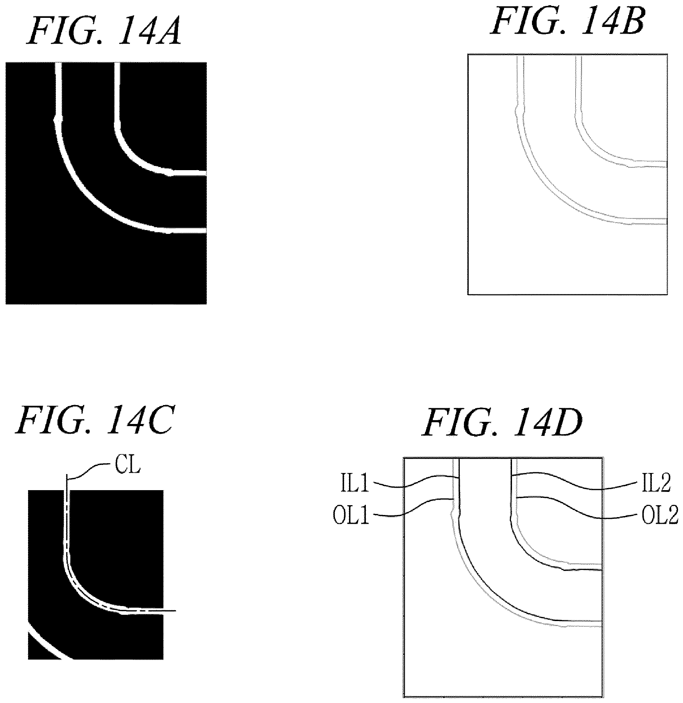

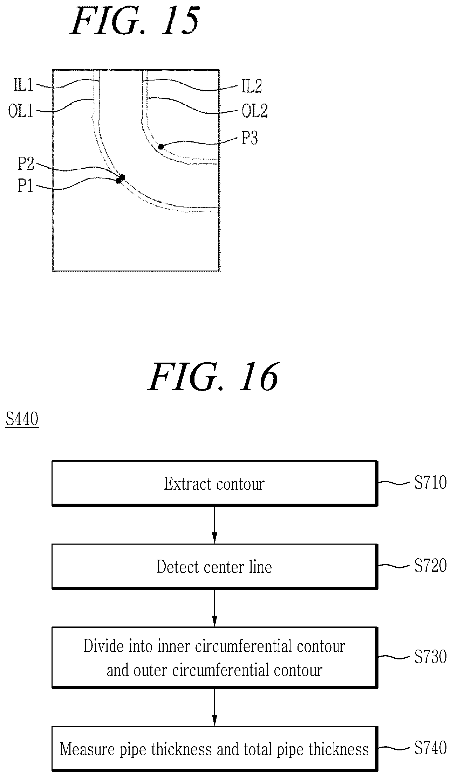

Next, a method for measuring the thickness of a pipe based on image analysis of the contour-based measuring part 520 according to an embodiment of the present disclosure will be described. FIG. 13 is a flowchart illustrating the method for measuring the thickness of a pipe based on the image analysis of the contour-based measuring part according to an embodiment of the present disclosure. FIGS. 14 and 15 are screen examples illustrating the method for measuring the thickness of a pipe based on the image analysis of the contour-based measuring part according to the embodiment of the present disclosure. To emphasize, FIG. 13 is a detailed description of S440 of FIG. 7.

Referring to FIG. 13, in S610, the contour-based measuring part 520 extracts the contour of a pipe as in FIG. 14B through image processing using a contour extraction algorithm, for example, in the pipe image, as in FIG. 14A.

The contour-based measuring part 520 divides the contours into an inner circumferential contour and an outer circumferential contour in S620.

To this end, the contour-based measuring part 520 estimates a center line CL passing between two nearby contours of the pipe along the flow direction of the pipe through a polynomial fitting algorithm, as illustrated in FIG. 14C.

Next, the contour-based measuring part 520 divides the contours into inner circumferential outlines IL1 and IL2 and outer circumferential outlines OL1 and OL2 according to positions thereof relative to the center line CL of the contours, as illustrated in FIG. 14D.

Next, in S630, the contour-based measuring part 520 derives the pipe thickness and the total pipe thickness based on the inner circumferential outlines IL1 and IL2 and the outer circumferential outlines OL1 and OL2.

That is, referring to FIG. 15, the contour-based measuring part 520 derives a distance between the pixel P1 on the outer circumferential contour OL1 and the pixel P2 on the inner circumferential contour IL1 closest to the pixel P1 on the outer circumferential contour OL1 as the pipe thickness. In addition, the contour-based measuring part 520 derives a distance between the pixel P1 of the outer circumferential contour OL1 and the pixel of another outer circumferential contour OL2 closest to the pixel P1 on the outer circumferential contour OL1 as the total pipe thickness.

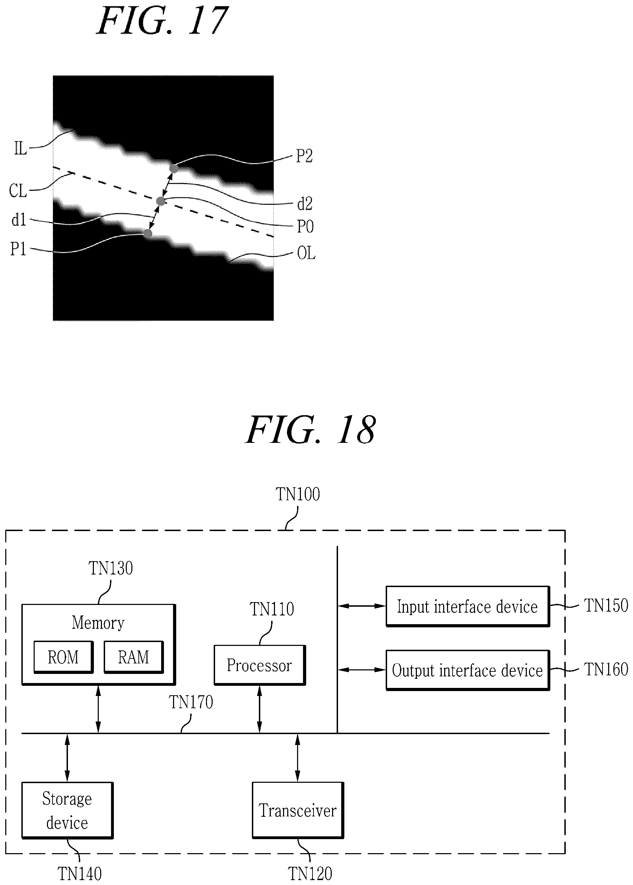

Next, the method for measuring the thickness of a pipe based on the image analysis of the contour-based measuring part 520 according to another embodiment of the present disclosure will be described. FIG. 16 is a flowchart illustrating a method for measuring the thickness of a pipe based on image analysis of a contour-based measuring part according to the another embodiment of the present disclosure. FIG. 17 is a screen example illustrating the method for measuring the thickness of a pipe based on the image analysis of the contour-based measuring part according to the another embodiment of the present disclosure. To emphasize, FIG. 16 is a detailed description of S440 of FIG. 7.

Referring to FIG. 16, in S710, the contour-based measuring part 520 extracts the contours of a pipe, as in FIG. 14B, through image processing using a contour extraction algorithm, for example, in the pipe image, as in FIG. 14A.

In S720, the contour-based measuring part 520 estimates the center line CL passing between two nearby contours of the pipe according to the flow direction of the pipe through a polynomial fitting algorithm as illustrated in FIG. 14C.

Next, in S730, the contour-based measuring part 520 divides the contours into the inner circumferential outlines IL1 and IL2 and the outer circumferential outlines OL1 and OL2 according to positions thereof relative to the center line CL of the contours, as illustrated in FIG. 14D.

The contour-based measuring part 520 may detect, as the pipe thickness, the sum (d1+d2) of a distance d1 between a pixel P0 of the center line CL and a pixel P1 of an outer circumferential contour OL closest to the pixel P1, and a distance d2 between the pixel P0 of the center line CL and a pixel P2 of the inner circumferential contour IL closest to the pixel P1, as illustrated in FIG. 17 in S740.

FIG. 18 is a diagram illustrating a computing device according to an embodiment of the present disclosure. The computing device TN100 of FIG. 18 may be a device (e.g., the management device 10) described herein.

In an embodiment of FIG. 18, the computing device TN100 may include at least one processor TN110, a transceiver TN120, and a memory TN130. In addition, the computing device TN100 may further include a storage device TN140, an input interface device TN150, and an output interface device TN160, etc. The components included in the computing device TN100 may be connected to each other by a bus TN170 and may communicate with each other.

The processor TN110 may execute a program command stored in at least one of the memory TN130 and the storage device TN140. The processor TN110 may refer to a central processing unit (CPU), a graphics processing unit (GPU), or a dedicated processor on which methods according to embodiments of the present disclosure are performed. The processor TN110 may be configured to implement procedures, functions, and methods described in connection with embodiments of the present disclosure. The processor TN110 may control each component of the computing device TN100.

Each of the memory TN130 and the storage device TN140 may store various information related to the operation of the processor TN110. Each of the memory TN130 and the storage device TN140 may be composed of at least one of a volatile storage medium and a non-volatile storage medium. For example, the memory TN130 may be composed of at least one of read-only memory (ROM) and random access memory (RAM).

The transceiver TN120 may transmit or receive a wired or wireless signal. The transceiver TN120 may be connected to a network to perform communication.

In particular, the learning part 100, the image processing part 200, the classification part 300, the recognition part 400, the measuring part 500, and the management part 600 according to the embodiment of the present disclosure may be software stored in the memory TN130 and executed in the processor TN110, or may be a sub-module of the processor TN110.

Meanwhile, various methods according to the embodiments of the present disclosure described above may be implemented in the form of readable programs through various computers and recorded on a computer-readable recording medium. Here, the recording medium may include program commands, data files, and data structures, etc., alone or combinations thereof. The program commands recorded on the recording medium may be specially designed and constructed for the present disclosure or may be known and available to those skilled in the art of computer software. For example, the recording medium include magnetic media such as hard disks, floppy disks, and magnetic tapes, optical media such as CD-ROMs and DVDs, magneto-optical media such as floptical disks, and a hardware device, such as ROMs, RAMs, and flash memories, configured specifically to store and execute program commands. Examples of the program commands may include machine language, such as a thing which produced by a compiler, and high-level language wires that can be executed by a computer by using an interpreter, etc. Such a hardware device may be configured to operate as one or more software modules to perform the operation of the present disclosure, and vice versa.

While the embodiments of the present disclosure have been described, it will be apparent to those skilled in the art that various modifications and variations can be made in the present disclosure through addition, change, omission, or substitution of components without departing from the idea of the disclosure as set forth in the appended claims, and such modifications and changes may also be included within the scope of the present disclosure.

**Claims**

1. A method for measuring a thickness, the method comprising:

   training neural networks, by a learning part(100);
   generating a pipe image that distinguishes a pipe from a non-pipe object in a radiographic image;
   generating, by a recognition part(400), the pipe image using the neural networks; and
   measuring, by a measuring part(500), a pipe thickness as a distance between a first pixel on a first outer circumferential surface of the pipe and a second pixel on an inner circumferential surface of the pipe, the inner circumferential surface being closest to the first pixel, and a total pipe thickness as a distance between the first pixel and a third pixel on a second outer circumferential surface of the pipe, the second outer circumferential surface being closest to the first pixel, by analyzing the pipe image.

2. The method of claim 1, wherein the measuring includes:

   specifying, by a measurement line-based measuring part(510), a detection area through a window moving along the pipe of the pipe image;
   estimating, by the measurement line-based measuring part(510), a center line parallel to the inner circumferential surface and the first outer circumferential surface of the pipe and located between the inner circumferential surface and the first outer circumferential surface of the pipe in the detection area using a linear regression model;
   detecting, by the measurement line-based measuring part(510), a measurement line orthogonal to the center line; and
   measuring, by the measurement line-based measuring part(510), the pipe thickness and the total pipe thickness according to pixel values changing along the measurement line.

3. The method of claim 2, wherein the measuring of the pipe thickness and the total pipe thickness includes:

   specifying, by the measurement line-based measuring part(510), the first pixel, the second pixel, and the third pixel through the pixel values changing along the measurement line;
   determining, by the measurement line-based measuring part(510), the distance between the first pixel and the second pixel on the measurement line as the pipe thickness; and
   determining, by the measurement line-based measuring part(510), the distance between the first pixel and the third pixel on the measurement line as the total pipe thickness.

4. The method of claim 1, 2 or 3, wherein the measuring includes:

   extracting, by a contour-based measuring part(520), contours of the pipe from the pipe image;
   dividing, by the contour-based measuring part(520), the contours into a plurality of inner circumferential contours and a plurality of outer circumferential contours;
   determining, by the contour-based measuring part(520), a distance between a fourth pixel on a first outer circumferential contour of the plurality of outer circumferential contours and a fifth pixel on an inner circumferential contour of the plurality of inner circumferential contours, the inner circumferential contour being closest to the fourth pixel, as the pipe thickness; and
   determining, by the contour-based measuring part(520), a distance between the fourth pixel and a sixth pixel on a second outer circumferential contour of the plurality of outer circumferential contours, the second outer circumferential contour being closest to the fourth pixel, as the total pipe thickness.

5. The method of claim 4, wherein the dividing the contours into the plurality of inner circumferential contours and the plurality of outer circumferential contours includes:

estimating, by the contour-based measuring part(520), a center line passing between two nearby contours of the pipe along a flow direction of the pipe using a polynomial fitting algorithm; and
determining, by the contour-based measuring part(520), each of the contours as one of an inner circumferential outline and an outer circumferential outline according to a position of each of the contours relative to the center line.

6. The method of claim 1, wherein the measuring includes:

extracting, by a contour-based measuring part(520), contours of the pipe from the pipe image;
estimating, by the contour-based measuring part(520), a center line passing between two nearby contours of the pipe along a flow direction of the pipe using a polynomial fitting algorithm; and
dividing, by the contour-based measuring part(520), the two nearby contours into an inner circumferential contour and an outer circumferential contour according to positions of the two nearby contours relative to the center line; and
detecting, by the contour-based measuring part(520), a sum of a distance between a fourth pixel on the center line and a fifth pixel on the outer circumferential contour closest to the fourth pixel and a distance between the fourth pixel and a sixth pixel on the inner circumferential contour closest to the fourth pixel, and determining the sum as the pipe thickness.

7. The method of claim 1, wherein the measuring includes:

detecting sequentially, by a measurement line-based measuring part(510), a center line parallel to the inner circumferential surface and the first outer circumferential surface of the pipe and located between the inner circumferential surface and the first outer circumferential surface, and a measurement line orthogonal to the center line;
measuring, by the measurement line-based measuring part(510), the pipe thickness and the total pipe thickness using the detected measurement line; and
measuring, by a contour-based measuring part(520), the pipe thickness and the total pipe thickness using contours of the pipe in the pipe image,
wherein the method further includes calculating, by an integrated output part(530), a final pipe thickness and a final total pipe thickness by averaging or interpolating the pipe thickness and the total pipe thickness measured by the measurement line-based measuring part(510) and the pipe thickness and the total pipe thickness measured by the contour-based measuring part(520), respectively.

8. The method according to any one of the preceding claims, further comprising:
converting, by an actual measurement conversion part(540), the pipe thickness into an actual measurement value based on a ratio of the total pipe thickness to a pre-stored actual measurement value of an entire pipe.

9. The method according to any one of the preceding claims, wherein the generating the pipe image includes:

detecting, by the recognition part(400), an area occupied by an object other than the pipe through a bounding box in the pipe image using the neural networks comprising a detection model; and
specifying, by the recognition part(400), a remaining area excluding the bounding box as a measurement target area.

10. The method according to any one of the preceding claims, wherein the generating the pipe image includes:

inputting, by the recognition part(400), the radiographic image into the neural networks comprising a generation model; and
performing, by the generation model(GM), a plurality of operations applying weights learned for the radiographic image to generate the pipe image which distinguishes pixels occupied by the pipe from pixels occupied by the non-pipe object.

11. The method according to any one of the preceding claims, further comprising:

providing, by a learning part(100), training data which includes the pipe image including the non-pipe object and the pipe and a target image displaying a target bounding box representing an area occupied by the non-pipe object in the pipe image;

inputting, by the learning part(100), the pipe image into the neural networks comprising a detection model;

detecting, by the detection model(GM), a bounding box representing the area occupied by the non-pipe object included in the pipe image through a plurality of operations applying weights which have not been completely trained for the pipe image;

calculating, by the learning part(100), a loss representing a difference between the target bounding box and the detected bounding box through a loss function; and

updating, by the learning part(100), the weights of the detection model so that the loss is minimized through optimization, before the generating of the pipe image.

12. The method of claim 11, wherein the loss includes:

a coordinate loss representing a difference between coordinates of the target bounding box and coordinates of the detected bounding box; and

a classification loss representing a probability that an object within the detected bounding box is the non-pipe object,

wherein the method further includes repeating, by the learning part(100), the detecting of the bounding box, the calculating of the loss, and the updating of the weights until a degree of overlapping between the detected bounding box and the target bounding box is equal to or greater than a predetermined percentage and each of the coordinate loss and the classification loss converges to a value equal to or less than a preset target value.

13. An apparatus for measuring a thickness, the apparatus comprising:

a learning part(100) configured to train neural networks generating a pipe image which distinguishes a pipe from a non-pipe object in a radiographic image;

a recognition part(400) configured to generate the pipe image using the neural networks; and

a measuring part(500) configured to measure a pipe thickness as a distance between a first pixel on a first outer circumferential surface of the pipe and a second pixel on an inner circumferential surface of the pipe, the inner circumferential surface being closest to the first pixel, and a total pipe thickness as a distance between the first pixel and a third pixel on a second outer circumferential surface of the pipe, the second outer circumferential surface being closest to the first pixel, by analyzing the pipe image.

14. The apparatus of claim 13, wherein the measuring part(500) includes a measurement line-based measuring part configured to:

specify a detection area through a window moving along the pipe of the pipe image;

estimate a center line parallel to the inner circumferential surface and the first outer circumferential surface of the pipe and located between the inner circumferential surface and the first outer circumferential surface of the pipe in the detection area using a linear regression model;

detect a measurement line orthogonal to the center line; and

measure the pipe thickness and the total pipe thickness according to pixel values changing along the measurement line.

15. The apparatus of claim 13 or 14, wherein the measurement line-based measuring part is configured to:

specify the first pixel, the second pixel, and the third pixel through the pixel values changing along the measurement line;

determine the distance between the first pixel and the second pixel on the measurement line as the pipe thickness; and

determine the distance between the first pixel and the third pixel on the measurement line as the total pipe thickness.

## FIG. 1

1

Imaging device

10

Management device

## FIG. 2

10

100

Learning
part

Image
processing part
200

Classification
part
300

Recognition
part
400

Measuring
part
500

Management
part
600

# FIG. 3

500

510

Measurement
line-based
measuring part

530

Integrated
output part

Pipe image

520

Contour-based
measuring part

540

Actual
measurement
conversion part

# FIG. 4

| Prepare training data including feature vector and target vector | — S110 |

↓

| Input feature vector | — S120 |

↓

| Derive classification vector | — S130 |

↓

| Calculate difference between classification vector and target vector | — S140 |

↓

| Update weight | — S150 |

↓

S160

No ← Condition satisfied?

↓ Yes

| Stop learning | — S170 |

# FIG. 5

| | |
|---|---|
| Provide data including radiographic image and target image | — S210 |

↓

| | |
|---|---|
| Input radiographic image | — S220 |

↓

| | |
|---|---|
| Derive pipe image | — S230 |

↓

| | |
|---|---|
| Calculate difference between pipe image and target image | — S240 |

↓

| | |
|---|---|
| Update weight | — S250 |

↓

S260

No ← Condition satisfied?

↓ Yes

| | |
|---|---|
| Stop learning | — S270 |

# FIG. 6

Provide training data including pipe image and target image with target bounding box — S310

Input pipe image — S320

Detect bounding box — S330

Calculate difference between detected bounding box and target bounding box — S340

Update weight — S350

Condition satisfied? S360

No

Yes

Stop learning — S370

EP 4 586 191 A1

## FIG. 7

| Obtain radiographic image | S410 |
|---|---|
| Derive pipe image | S420 |
| Specify measure measurement target area | S430 |
| Measure pipe thickness | S440 |
| Calculate final pipe thickness | S450 |
| Convert to actual measurement value | S460 |

# FIG. 8

# FIG. 9

# FIG. 10

S440

Specify detection area — S510

↓

Estimate center line — S520

↓

Detect measurement line — S530

↓

Measure pipe thickness and total pipe thickness — S540

# FIG. 11

# FIG. 12

S

E

Pipe thickness

P2

Total pipe thickness

P1

P3

# FIG. 13

S440

| Extract contour | S610 |

↓

| Divide into inner circumferential contour and outer circumferential contour | S620 |

↓

| Measure pipe thickness and total pipe thickness | S630 |

*FIG. 14A*

*FIG. 14B*

*FIG. 14C*

*FIG. 14D*

# FIG. 15

# FIG. 16

S440

# FIG. 17

# FIG. 18

Europäisches
Patentamt

European
Patent Office

Office européen
des brevets

**EUROPEAN SEARCH REPORT**

Application Number

EP 24 22 1597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2019/154596 A1 (TELEKI PÉTER [HU]) 23 May 2019 (2019-05-23) * abstract; figures 1-6b * * paragraphs [0016], [0020] * | 1-15 | INV.<br>G06T7/00<br>G06T7/62 |
| A | ONEL YENER ET AL: "Radiographic Wall Thickness Measurement of Pipes by a New Tomographic Algorithm", 15TH WORLD CONFERENCE ON NON-DESTRUCTIVE TESTING15-21 OCTOBER 2000 IN ROMEPROCEEDINGS, 1 November 2000 (2000-11-01), XP093152707, * the whole document * | 1-15 | |
| A | US 2022/299451 A1 (SANO TERUAKI [JP] ET AL) 22 September 2022 (2022-09-22) * abstract; figures 1-10 * * paragraphs [0005], [0039], [0041], [0079] - [0083] * | 1-15 | |

TECHNICAL FIELDS
SEARCHED (IPC)

G06T

The present search report has been drawn up for all claims

| Place of search | Date of completion of the search | Examiner |
|---|---|---|
| Munich | 26 May 2025 | Marani, Roberta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1597

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | | Publication date | Patent family member(s) | | Publication date |
|---|---|---|---|---|---|
| US 2019154596 | A1 | 23-05-2019 | AU | 2017369865 A1 | 07-03-2019 |
| | | | BR | 112019001624 A2 | 07-05-2019 |
| | | | CA | 3031891 A1 | 07-06-2018 |
| | | | CN | 109791114 A | 21-05-2019 |
| | | | EA | 201990310 A1 | 28-06-2019 |
| | | | EP | 3491368 A2 | 05-06-2019 |
| | | | HU | E051804 T2 | 29-03-2021 |
| | | | IL | 264448 A | 28-02-2019 |
| | | | JP | 2019523418 A | 22-08-2019 |
| | | | KR | 20190031524 A | 26-03-2019 |
| | | | US | 2019154596 A1 | 23-05-2019 |
| | | | WO | 2018100404 A2 | 07-06-2018 |
| | | | ZA | 201901158 B | 23-12-2020 |
| US 2022299451 | A1 | 22-09-2022 | CN | 114270181 A | 01-04-2022 |
| | | | DE | 112020007436 T5 | 27-04-2023 |
| | | | JP | 7221419 B2 | 13-02-2023 |
| | | | JP | WO2022014019 A1 | 20-01-2022 |
| | | | KR | 20230035511 A | 14-03-2023 |
| | | | US | 2022299451 A1 | 22-09-2022 |
| | | | WO | 2022014019 A1 | 20-01-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240001882